(19) Europäisches Patentamt
European Patent Office
Office européen des brevets

(11) **EP 3 152 037 B1**

(12) **FASCICULE DE BREVET EUROPEEN**

(45) Date de publication et mention de la délivrance du brevet:
**14.04.2021 Bulletin 2021/15**

(21) Numéro de dépôt: **15732832.9**

(22) Date de dépôt: **02.06.2015**

(51) Int Cl.:
*B29C 64/386* (2017.01)    *B29C 64/40* (2017.01)
*B29C 64/118* (2017.01)    *G06F 30/00* (2020.01)

(86) Numéro de dépôt international:
**PCT/FR2015/051447**

(87) Numéro de publication internationale:
**WO 2015/185845 (10.12.2015 Gazette 2015/49)**

(54) **PROCÉDÉ DE DÉTERMINATION DES POINTS À SUPPORTER POUR UN OBJET FABRIQUÉ AU MOYEN D'UN PROCÉDÉ DE FABRICATION ADDITIVE ET SUPPORT D'ENREGISTREMENT D'INFORMATIONS**

VERFAHREN ZUR BESTIMMUNG DER ZU UNTERSTÜTZENDEN PUNKTE FÜR EIN DURCH EIN GENERATIVES FERTIGUNGSVERFAHREN HERGESTELLTES OBJEKT UND INFORMATIONSAUFZEICHNUNGSMEDIUM

METHOD FOR DETERMINING THE POINTS TO BE SUPPORTED FOR AN OBJECT MANUFACTURED BY MEANS OF AN ADDITIVE MANUFACTURING METHOD AND INFORMATION RECORDING MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2014 FR 1455128**

(43) Date de publication de la demande:
**12.04.2017 Bulletin 2017/15**

(73) Titulaires:
• **INRIA - Institut National de Recherche en Informatique et en Automatique**
**78150 Le Chesnay (FR)**
• **Université de Lorraine**
**54052 Nancy Cedex (FR)**

(72) Inventeurs:
• **LEFEBVRE, Sylvain**
**54840 Valaine-en-Haye (FR)**
• **DUMAS, Jérémie**
**13710 Fuveau (FR)**
• **HERGEL, Jean**
**54000 Nancy (FR)**

(74) Mandataire: **Cabinet Netter**
**36, avenue Hoche**
**75008 Paris (FR)**

(56) Documents cités:
**WO-A1-2009/047355     WO-A2-02/20251
US-A1- 2009 072 447**

## Description

L'invention a pour domaine celui des structures de support pour supporter un objet au cours de sa fabrication par la mise en œuvre d'un procédé de fabrication additive, la structure de support et l'objet étant imprimés simultanément.

Un procédé de fabrication additive consiste à ajouter des couches de matière pour réaliser l'objet par dépôts successifs de matière.

Parmi les procédés de fabrication additive, l'impression 3D et, en particulier, l'impression 3D à filament, aussi dénommée impression FFF selon l'acronyme anglais « Fused filament fabrication », connaît un essor important, notamment pour les phases de conception d'un objet, avant sa mise en production.

Plus précisément, un filament de matière, généralement un plastique, est forcé à travers une buse chauffante et mobile. Au cours du déplacement de la buse le long d'un chemin prédéterminé dans un plan horizontal XY, le filament fondu, extrudé de la buse, est déposé sur la matière de la couche précédente et s'y soude, créant ainsi une épaisseur supplémentaire. De proche en proche, par couches successives, l'objet est fabriqué.

L'impression 3D à filament présente un prix de revient faible, aussi bien pour l'imprimante, que pour la matière première. Elle est également d'une grande facilité d'utilisation, car elle ne nécessite que quelques étapes supplémentaires avant et après l'impression proprement dite. En amont, il s'agit de générer un fichier de données décrivant géométriquement l'objet à imprimer au moyen d'un logiciel de CAO adapté, puis de déterminer automatiquement les chemins que doit suivre la buse d'impression pour déposer de la matière afin de réaliser cette géométrie. En aval, il s'agit de séparer l'objet du plateau de l'imprimante sur laquelle il a été fabriqué.

Cependant, un problème général des procédés de fabrication additive, en particulier des procédés d'impression 3D, de stéréolithographie ou autres, réside dans le fait que la matière d'une couche doit nécessairement être déposée sur une surface existante, que ce soit, pour la première couche, le plateau sur lequel l'objet est fabriqué ou, pour une autre couche, la couche de matière précédente.

En conséquence, il n'est a priori pas possible de réaliser directement par un procédé de fabrication additive, un objet comportant des portions en surplomb.

Pour contourner cette limitation des procédés de fabrication additive, il est nécessaire d'étayer les portions en surplomb de l'objet par un support adapté, de manière à ce que la matière d'une couche soit supportée et que la portion en surplomb puisse être fabriquée.

Avantageusement, le support est une structure de support qui est fabriquée en même temps que l'objet lui-même et qui est séparée de celui-ci à l'issue de la fabrication, dans une étape aval du processus de fabrication.

Ainsi, pour un procédé d'impression 3D à filament, il convient, dans une étape amont, suite à la génération de la géométrie de l'objet à imprimer au moyen d'un logiciel de CAO et avant de déterminer les chemins que doit suivre la buse pour déposer la matière et réaliser cette géométrie, d'élaborer une structure de support de l'objet.

Des procédés d'élaboration d'une structure de support sont connus.

Un premier procédé conduit à l'élaboration d'une structure de support robuste. Un tel procédé consiste d'abord à extruder les surfaces à supporter de l'objet vers le bas jusqu'au plateau de l'imprimante, de manière à définir un volume d'extrusion. Puis, ce volume d'extrusion est rempli en utilisant un motif de remplissage. Le motif de remplissage est par exemple un motif en nid d'abeilles. Ce motif est prédéterminé et ne s'adapte pas à l'objet supporté.

Dans un second procédé, qui conduit également à l'élaboration d'une structure de support, robla structure de support est un treillis volumique régulier dont seules les arêtes situées dans le volume d'extrusion sont conservées, les arêtes touchant l'objet ou situées au dessus étant supprimées. Une étape supplémentaire consiste à supprimer des arêtes à l'intérieur de volume d'extrusion pour encore simplifier la structure de support. La structure de support est donc toujours un sous-ensemble du treillis régulier d'origine.

La géométrie de la structure de support obtenue au moyen de ces procédés est donc en partie indépendante de l'objet à imprimer, puisque les éléments constituant le treillis ainsi que leurs positions sont prédéterminés par le motif de treillis choisi à l'origine. En particulier, ces éléments ne peuvent pas se positionner ou s'orienter localement en fonction de la géométrie de l'objet à supporter ce qui conduit à une structure de support plus importante. De plus, afin de garantir qu'une telle structure de support reste imprimable il est nécessaire de garder des colonnes, qui sont constituées d'un ensemble d'arêtes formant des structures minimales imprimables, ce qui limite la réduction maximale possible et complexifie l'algorithme de suppression des arêtes du treillis.

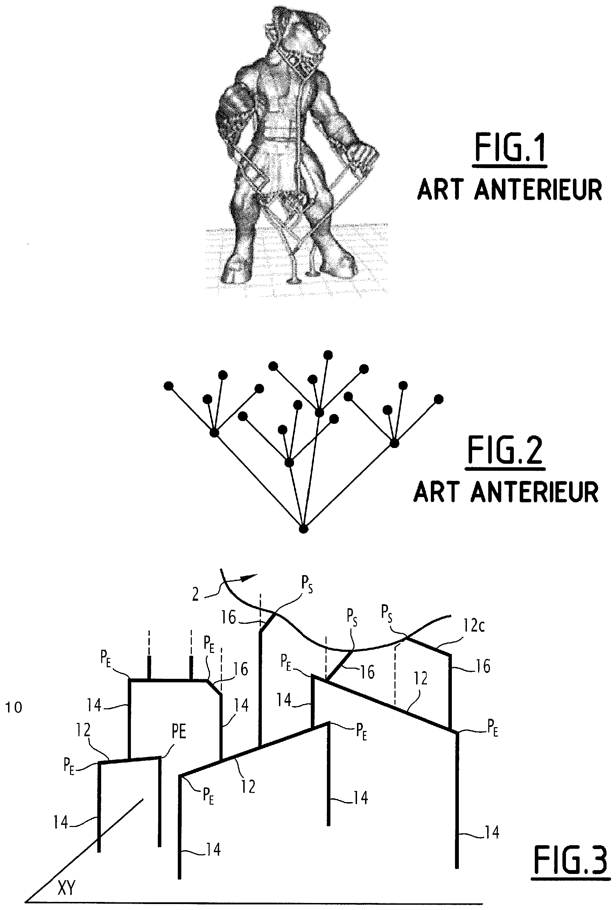

Un troisième procédé, dont les détails algorithmiques sont gardés secrets, conduit à l'élaboration d'une structure de support arborescente. Une telle structure de support étayant une figurine est illustrée par la figure 1. Une structure de support arborescente est représentée schématiquement à la figure 2, les points d'extrémités, constituant les « feuilles » de l'arbre, étant les points à supporter à la surface de l'objet à imprimer.

Une structure de support arborescente est légère. Elle ne nécessite que peu de matière première, et, par conséquent, un temps d'impression réduit.

Cependant, ce second type de procédé n'est pas déterministe et conduit, à partir d'un même objet, à déterminer plusieurs structures de support arborescentes possibles. Or, certaines de ces structures possibles ne sont pas mécaniquement stables : elles ne sont pas suffisantes pour supporter l'objet au cours de sa fabrication et les portions en surplomb sont susceptibles de s'affaisser au cours de l'impression, conduisant à la fabrication d'un objet présentant des défauts.

Pour choisir la bonne structure de support arborescente, il faut soit procéder à une simulation mécanique complexe, dont les paramètres exacts sont très difficiles à déterminer, soit procéder à des essais d'impression avec différentes structures arborescentes possibles, et choisir celle ayant conduit à la fabrication d'un objet présentant le moins de défaut. Une telle méthode du type essai/erreur n'est pas efficace dans le domaine de l'impression 3D. Elle conduit notamment à une consommation de matière première importante et à des temps d'impression élevés. Elle demande de plus une formation spécifique des opérateurs concevant les structures de support Le document WO02/20251 A2 montre un procédé de détermination de points à supporter pour un objet devant être fabriqué au moyen d'un procédé de fabrication additive.

L'invention a donc pour but de pallier les problèmes précités, en proposant notamment un procédé automatique d'élaboration d'une structure de support pour un objet à réaliser au moyen d'un procédé de fabrication additive, qui soit mécaniquement robuste tout en restant légère, c'est-à-dire ne nécessitant qu'une quantité réduite de matière et un temps d'impression réduit, l'élaboration consistant, d'abord, à définir des points de l'objet à supporter, puis, à générer une structure de support à partir de ces points à supporter

L'invention a pour objet un procédé de détermination d'un ensemble de points à supporter pour un objet devant être fabriqué au moyen d'un procédé de fabrication additive, selon la revendication 1.

Suivant des modes particuliers de réalisation, la structure de support comporte une ou plusieurs des caractéristiques suivantes, prise(s) isolément ou suivant toutes les combinaisons techniquement possibles :

- l'élément de support sensiblement vertical prévu est soit un pilier vertical reliant le point de contact et le point à supporter à la surface du sous-objet, soit un pilier vertical et un pont connecteur horizontal connectant l'extrémité supérieure dudit pilier vertical et ledit point à supporter à la surface du sous-objet.
- préalablement à l'étape consistant à ajouter à un ensemble des points à supporter, des points à supporter à la surface de l'objet qui permettent de garantir la stabilité de tous les sous-objets de l'objet, le procédé comporte les étapes consistant à, pour chaque couche : définir au moins un chemin de fabrication de la couche courante ; et, pour chaque point d'une pluralité de points le long dudit chemin, tester une condition de support, par la couche précédente, de la matière déposée au point considéré ; et, en cas de non-respect de la condition de support, ajouter le point non-supporté à l'ensemble des points à supporter.

- en cas de non-respect de la condition de support, une étape supplémentaire de vérification d'un critère de distance, le point non-supporté étant ajouté à l'ensemble des points à supporter si une distance entre le point non-supporté et un point voisin, appartenant à l'ensemble des points à supporter, est supérieure à un distance seuil.
- le ou chaque chemin étant du type chemin de périmètre, lorsqu'il appartient à une portion de périmètre de la couche courante, ou du type chemin interne, lorsqu'il appartient à une portion intérieure de la couche courante, pour un point non-supporté d'un chemin du type chemin de périmètre, le critère de distance mis en œuvre consiste à évaluer une distance curviligne le long dudit chemin entre le point non-supporté et un point voisin, défini comme le point le plus proche parmi l'ensemble des points à supporter qui appartiennent à la couche courante ; tandis que pour un point non-supporté d'un chemin du type chemin interne, le critère de distance mis en œuvre consiste à évaluer une distance rectiligne entre le point non-supporté et un point voisin, défini alors comme le point le plus proche du point non-supporté parmi l'ensemble des points à supporter qui appartiennent à la couche courante et aux couches inférieures à la couche courante.
- le procédé comporte une étape supplémentaire de détermination de la pluralité de points à considérer lors de l'étape consistant à tester une condition de support, au cours de laquelle le ou chaque chemin est décomposé en chemins élémentaires s'étendant entre deux points anguleux successifs dudit chemin, et, lorsque la longueur d'un chemin élémentaire est supérieure à une longueur seuil, subdiviser ledit chemin élémentaire en autant de chemins élémentaires, ladite pluralité de points étant constituée par les extrémités de chacun des chemins élémentaires.
- la condition de support testée sur un point consiste à calculer la fraction de la surface d'un disque qui couvre la couche précédente, ledit disque étant centré sur le point considéré et possédant un rayon prédéfini, le point considéré étant non-supporté lorsque ladite fraction est inférieure à une fraction seuil, par exemple de 50%.
- l'ensemble des points à supporter garantit que le filament est soutenu au cours de la fabrication de l'objet par la mise en œuvre d'un procédé de fabrication additive utilisant une imprimante 3D à filament.

L'invention a également pour objet un support d'enregistrement d'information selon la revendication 8, caractérisé en ce qu'il comporte des instructions pour l'exécution d'un procédé conforme au procédé précédent.

La divulgation a également pour objet une structure de support pour supporter un objet au cours de sa fabrication en mettant en œuvre un procédé de fabrication additive, la structure de support et l'objet étant imprimés simultanément, caractérisée en ce qu'elle supporte l'objet en une pluralité de points appartenant à un ensemble des points à supporter résultant de la mise en œuvre d'un procédé de détermination d'un ensemble de points à supporter conforme au procédé précédent.

De préférence, la structure comporte au moins un élément sensiblement vertical entre un point de contact d'un plan de base et un point à supporter à la surface de l'objet appartenant à l'ensemble des points à supporter, ledit élément sensiblement vertical étant soit un pilier vertical, reliant le point de contact et le point à supporter, soit un pilier vertical et un pont connecteur horizontal connectant l'extrémité supérieure dudit pilier vertical audit point à supporter.

De préférence encore, la structure est composée d'une pluralité de ponts horizontaux et rectilignes, de piliers verticaux et de connecteurs inclinés, une extrémité inférieure d'un pilier reposant sur un pont, sur un plan de base ou sur la surface de l'objet, et une extrémité supérieure d'un pilier portant un connecteur, et une extrémité inférieure d'un connecteur reposant à l'extrémité supérieure d'un pilier et l'extrémité supérieure d'un connecteur portant un point à supporter de l'objet ou un point à supporter d'un pont, chaque pont étant supporté au moins à chacun de ses deux points d'extrémité, soit par un pilier soit par un point à supporter de l'objet.

L'invention sera mieux comprise à la lecture de la description qui va suivre d'un mode de réalisation particulier, donné uniquement à titre illustratif et non limitatif, et faite en se référant aux dessins annexés sur lesquels :

- la figure 1 est une représentation graphique d'un objet imprimé avec une structure de support arborescente selon l'art antérieur ;
- la figure 2 est une représentation schématique d'une structure de support arborescente selon l'art antérieur, les points d'extrémités, constituant les « feuilles » de l'arbre, étant les points à supporter à la surface de l'objet à imprimer ;
- la figure 3 est une représentation schématique d'une structure de support;

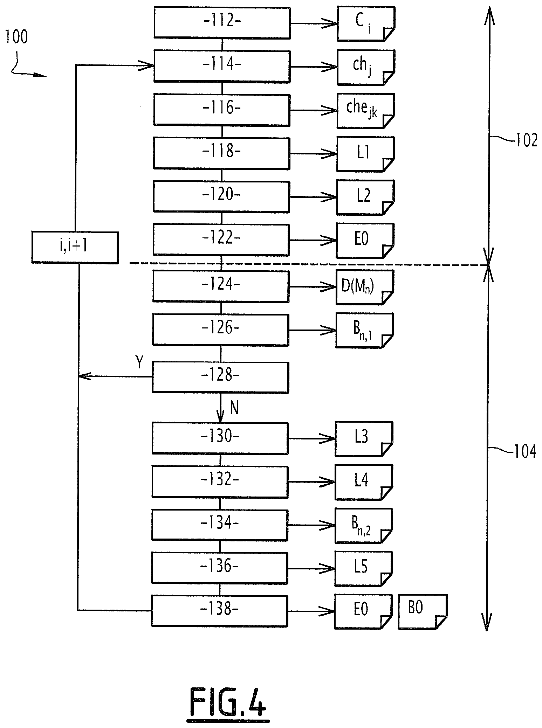

- la figure 4 est une représentation sous forme de blocs d'un procédé de définition de l'ensemble des points à supporter à la surface de l'objet, quelle que soit la nature de la structure de support finale supportant les points à supporter ainsi définis (structure selon l'art antérieur, par exemple arborescente, ou selon l'invention) ;
- les figures 5a à 5c représentent un objet monobloc dont la fabrication par un procédé de fabrication additive passe par la formation de sous-objets intermédiaires, le procédé de définition de l'ensemble des points à supporter selon l'invention permettant d'étayer chaque sous-objet ;
- la figure 6 est une représentation schématique en perspective des points utilisés dans le procédé de la figure 4 ;

- la figure 7 est une représentation sous forme de blocs d'un procédé de génération automatique d'une structure de support selon l'invention, à partir de la donnée d'un ensemble de points à supporter à la surface de l'objet à imprimer, que cet ensemble résulte ou non de la mise en œuvre du procédé de définition d'un ensemble de points à supporter selon la figure 4 ;
- la figure 8 est une illustration des notions de « segment » et d'« événement » utilisées dans le procédé de la figure 7 ;
- la figure 9 est une illustration d'un pont possible ;
- la figure 10 est une représentation schématique d'un élément sensiblement vertical, pilier ou connecteur, de la structure de support comportant une portion inférieure verticale et une portion supérieure inclinée, et,
- la figure 11 est une représentation graphique de l'objet de la figure 1 avec une structure de support.

Dans la description qui va suivre, le procédé de fabrication additive qu'il est envisagé de mettre en œuvre pour fabriquer l'objet et sa structure de support est un procédé d'impression 3D à filament. L'homme du métier saura comment adapter l'enseignement technique de la présente description à d'autres types de procédé de fabrication additive.

## Structure de support

La mise en œuvre du procédé selon l'invention conduit à l'élaboration d'une structure de support propre, dans une étape finale de fabrication au moyen d'une imprimante 3D à filament, à être imprimée avec l'objet de manière à le soutenir à chaque instant de son impression.

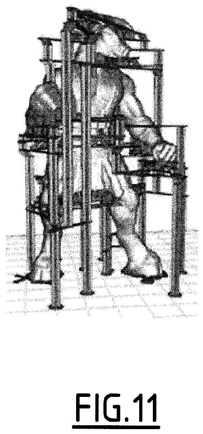

Une structure de support 10 est illustrée sur la figure 3. Est représenté sur la figure 11 le cas de l'impression d'un objet 2 représentant une figurine, identique à celle de la figure 1, étayé avec la structure de support.

La surface de l'objet 2 est référencée de manière générale par le chiffre 4.

La structure de support 10 vient étayer l'objet 2 en une pluralité de points à supporter $P_S$ situés sur la surface 4 de l'objet 2.

La structure de support 10 comporte une pluralité de ponts 12, de piliers 14 et de connecteurs 16.

Un pont 12 est un composant horizontal et rectiligne.

Un pont présente une longueur $l$ entre ses deux points d'extrémité, et une hauteur $h$ au-dessus du plan de base constitué par le plateau de l'imprimante 3D à filament. Dans ce qui suit le plateau de l'imprimante est identifié à un plan de base horizontal XY, la normale à ce plan constituant l'axe Z des cotes.

Un pont 12 est supporté au moins à chacun de ses deux points d'extrémité. Dans le mode de réalisation décrit ici en détail, un pont 12 est supporté uniquement à chacun de ses deux points d'extrémité. Cependant, dans une variante de réalisation de la structure de support, un pont peut être supporté non seulement à chacun de ses deux points d'extrémité, mais également en au moins un autre point intermédiaire.

Un pont est de trois types possibles : soit il est supporté à chacun de ses deux points d'extrémité par des piliers 14 ; soit il est supporté en un point d'extrémité par un pilier 14 et l'autre point d'extrémité correspond à un point situé à la surface 4 de l'objet 2 ; soit encore chacun de ses deux points d'extrémité correspondent à des points situés à la surface 4 de l'objet 2. Il est à noter ici qu'un point à la surfaca de l'objet n'est pas forcément un point à supporter à la surface de l'objet tel que défini plus bas en relation avec les procédés selon l'invention. Ce sera uniquement le cas si ces points proviennent d'une analyse de stabilité comme décrite ci-dessous. Cependant, l'algorithme de mise en œuvre du procédé de génération de la structure peut décider, si on l'y autorise, d'ancrer un pont sur la surface de l'objet, en tout point de celle-ci, pour éviter de former un pilier.

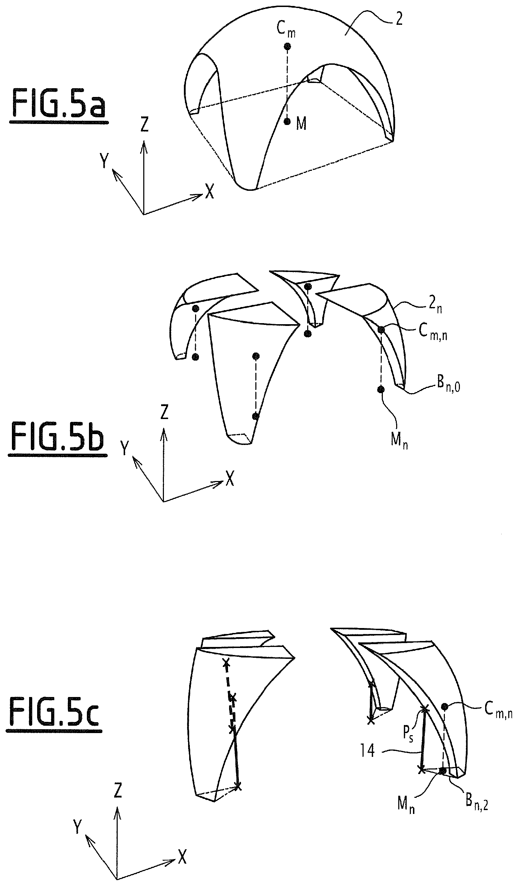

Les ponts du second et troisième types sont dénommés « ponts connecteur » dans ce qui suit. Ils sont indiqués par la référence 12C, comme par exemple sur la figure 5. Sauf mention explicite, un pont 12 est un pont du premier type. En variante, la structure ne comporte que des ponts du premier type.

Un pilier 14 est orienté verticalement. Il prend appui, par son extrémité inférieure, soit directement sur un pont 12, soit directement sur le plan de base, soit encore directement sur la surface 4 de l'objet 2.

Un pilier 14 supporte, indirectement, par l'intermédiaire d'un connecteur 16, soit un point d'extrémité $P_e$ d'un pont 12, soit un point à supporter $P_S$ à la surface 4 de l'objet 2.

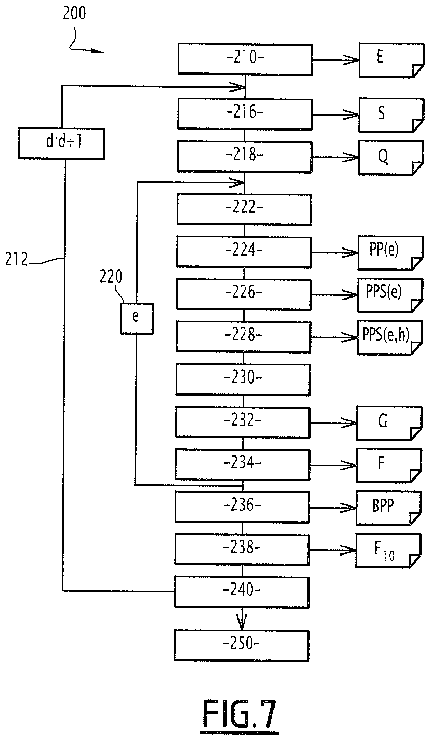

Comme représenté sur la figure 7, un connecteur forme un angle $a_0$ inférieur à un angle maximum $a_{0max}$ et possède une hauteur $h_0$ inférieure à une hauteur $h_{0max}$. De manière générale, ces deux paramètres sont contraints simultanément pour ne pas qu'un connecteur 16 ne dépasse un angle d'inclinaison maximum qui risquerait de présenter une résistance mécanique faible et d'être difficilement imprimable.

Il est à noter qu'un pilier 14 peut avoir une hauteur nulle, de sorte qu'un pont 12 situé plus haut repose directement sur un pont 12 situé plus bas, ou qu'un connecteur 16 prend appui par son extrémité inférieure directement sur un pont.

Un connecteur 16 peut également avoir une hauteur nulle, de sorte qu'un pilier 14 supporte un point qui est situé directement à la verticale du point du pont sur lequel prend appui le pilier considéré.

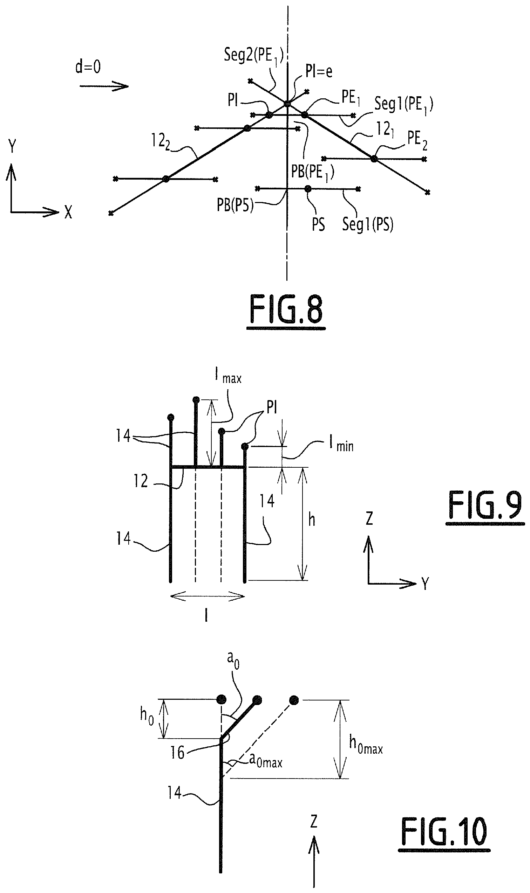

Comme représenté sur la figure 10, un pont 12 supporte directement au moins n piliers 14 (un pilier pouvant avoir une hauteur nulle), c'est-à-dire supporte n points à supporter parmi des points d'extrémité de ponts 12 situés plus haut ou des points à supporter $P_S$ à la surface 4 de l'objet 2.

L'intérêt d'un pont 12 étant de réduire le nombre de points à supporter P, en substituant aux n points qu'il supporte, les p piliers 14 qui le supportent, il est souhaitable que l'entier n soit supérieur à l'entier p. Dans le mode de réalisation décrit ici en détail, p étant égal à 2, il est souhaitable que n soit supérieur ou égal à 3. Cette contrainte est implémentée par une fonction de gain G adaptée dans le procédé de génération de la structure de support, qui sera décrit ci-après.

Dans une variante de réalisation, si les piliers sont trop hauts, il est préférable d'ajouter un pont intermédiaire de rigidification. Un tel pont supporte un pilier vertical et est supporté par deux piliers verticaux. Ceci permet de rigidifier la structure et d'éviter des phénomènes de flambage d'un pilier qui serait trop haut.

Les ponts 12 et les ponts connecteurs 12C sont, en vue de dessus, c'est-à-dire en projection dans un plan horizontal XY correspondant au plan de base, distribués selon d directions. Par direction, on entend les deux sens possibles le long d'une droite. De préférence, les directions se déduisent les unes des autres par rotations de $\pi/d$.

Dans le cas de l'utilisation d'une imprimante 3D à filament, un pont 12 est constitué par au moins un filament imprimé entre deux points d'extrémité à supporter constitués par les extrémités supérieures des deux piliers 14 supportant le pont 12 considéré. De manière similaire, un pont connecteur 12C est constitué par au moins un filament imprimé entre deux points à supporter constitués par un point à supporter $P_S$ de la surface 4 de l'objet 2 et l'extrémité supérieure du pilier 14 qui le supporte.

Il a été constaté qu'il est possible d'utiliser une imprimante 3D à filament pour étirer un filament de matière au-dessus d'un vide entre deux points de support dont la distance est inférieure à une portée maximale $D_{max}$ de quelques centimètres. Le filament chaud est extrudé de manière à se souder aux deux points de support en formant entre ces deux points une chainette. Lorsque le filament refroidit, le matériau du filament se rétracte de manière à former un pont sensiblement horizontal.

Ainsi, dans le mode de réalisation actuellement envisagé, un pont 12 (respectivement 12C) est constitué de deux couches successives.

Chaque couche présente une épaisseur de 0,4 mm. Elle est constituée de deux filaments disposés côte à côte, à une distance de 0,8 mm l'un de l'autre, distance qui correspond sensiblement au diamètre du filament utilisé.

Les ponts 12 (respectivement 12C) ainsi formés présentent des propriétés mécaniques suffisantes pour servir de composant élémentaire d'une structure de support d'un objet. Il a ainsi été constaté qu'un pont 12 (respectivement 12C) peut supporter à lui seul plusieurs grammes. Or, les objets à imprimer utilisent souvent moins de 10 m de filament (pour un filament de 1,75 mm de diamètre, cela représente un objet d'environ 25 g) et sont étayés par une structure de support comportant plusieurs ponts. L'objet est donc correctement supporté mécaniquement.

Chaque élément vertical, pilier 14 ou connecteur 16, présente de préférence une section transversale en forme de croix. Une telle section permet à la fois une consommation réduite de matière première et donc une impression rapide, tout en offrant une bonne rigidité. Bien évidemment, d'autres choix de section sont envisageables.

La structure de support 10 de l'objet 2 de la figure 3 pèse 0,5 g, alors que l'objet lui-même pèse environ 10 g.

Procédé de définition de l'ensemble des points de contact à soutenir

Va maintenant être décrit un procédé permettant la définition d'un ensemble E0 de points à supporter à la surface d'un objet à fabriquer.

Ce procédé 100 de définition, qui constitue un premier aspect de l'invention, est indépendant du procédé de génération de la structure de support, qui sera effectivement utilisé par la suite, en particulier du procédé 200 de génération décrit ci-dessous et constituant un second aspect de l'invention.

Ainsi la mise en œuvre du procédé 100 conduit à la définition d'un ensemble E0 de points à supporter $P_S$ à la surface 4 de l'objet 2. L'ensemble E0 regroupe les points de la surface 4 de l'objet 2 devant être étayés par la structure de support 10.

Incidemment, un pilier 14 de la structure de support 10 pouvant prendre appui soit sur un pont 12, soit sur le plan de base XY, soit encore sur la surface 4 de l'objet 2 lui-même, l'ensemble des points de contact entre la structure de support 10 et l'objet 2 comporte non seulement l'ensemble E0 des points à supporter $P_S$, mais également les points de la surface 4 de l'objet 2 sur lesquels prennent appui certains des piliers 14 de la structure de support 10.

Avantageusement, le procédé 100 permet de définir un ensemble E0 qui, par la mise en œuvre d'une première série d'étapes 102, permet de soutenir le filament au cours de l'impression, et qui, par une seconde série d'étapes 104, permet d'assurer la stabilité de l'objet à chaque instant de l'impression.

Pour cela le procédé 100 comporte une première série d'étapes consistant à déterminer des points à supporter $P_S$ qui ensemble permettent de soutenir le filament au cours de l'impression.

Dans une étape 112, l'objet 2 à imprimer est subdivisé en couches horizontales, chaque couche $C_i$ correspondant à l'épaisseur de matière déposée à chaque passage de la buse de l'imprimante 3D à filament. A cette étape, seul l'objet 2 est considéré. L'indice i correspond à un pas le long de l'axe Z des cotes.

Les étapes suivantes sont itérées pour chaque couche $C_i$, c'est-à-dire sur l'entier i. Celui-ci n'est pas rappelé à chaque étape pour ne pas alourdir les notations.

A l'étape 114, pour chaque couche $C_i$, les chemins $ch_j$ suivis par la buse pour imprimer la couche considérée sont déterminés. Les chemins sont soit du type chemin de périmètre, lorsqu'ils appartiennent au bord formant le périmètre de la couche $C_i$, soit du type chemin interne, lorsqu'ils appartiennent à l'intérieur de la couche $C_i$, c'est-à-dire à la couche $C_i$ de laquelle a été retirée le bord formant son périmètre.

A l'étape 116, chaque chemin $ch_j$ est décomposé en chemins élémentaires $che_{jk}$, chaque segment s'étendant entre deux points anguleux successifs du chemin, c'est-à-dire deux points où il y a un changement significatif de la direction de déplacement de la buse. Lorsque la longueur d'un chemin élémentaire est supérieure à une longueur seuil $l_0$ (de 5 mm par exemple), il est subdivisé en autant de segments élémentaires. La longueur seuil $l_0$ constitue un paramètre ajustable du procédé.

A l'étape 118, les points d'extrémité des chemins élémentaires $che_{jk}$ sont placés dans une première liste L1. La liste L1 est ordonnée en fonction du cheminement de la buse pour imprimer la couche $C_i$ courante.

L'étape 120 consiste à vérifier que chaque point P1 de la première liste L1 est supporté par la couche $C_{i-1}$, située immédiatement au-dessous de la couche $C_i$ courante.

Cette vérification consiste à calculer la fraction de la surface d'un disque D(P1) supportée par la couche $C_{i-1}$, ce disque étant centré sur le point P1 et possédant un rayon prédéfini, correspondant par exemple au diamètre de la buse (0,4 mm dans la mise en œuvre pratique du présent procédé).

Si plus d'un pourcentage seuil (prédéfini et réglable), par exemple égal à 50%, de la surface du disque D(P1) n'est pas supportée par la couche précédente, le point P1 est considéré comme étant un point non-supporté. Il est rentré dans une seconde liste L2, qui est ordonnée selon le cheminement de la buse pour imprimer la couche $C_i$.

A l'étape 122, la seconde liste L2 est parcourue. Si un point P2 de la liste L2 appartient à un chemin $ch_j$ du type périmètre, il est sélectionné dans l'ensemble E0 des points à supporter $P_S$, si la distance entre le point P2 et un point voisin PV (défini comme le point de l'ensemble E0 appartenant à la couche $C_i$ le plus proche du point P2 considéré) est supérieure à une distance seuil $\tau$, les distances étant ici des distances curvilinéaires évaluées le long du chemin considéré.

En revanche, si le point P2 de la liste L2 appartient à un chemin $ch_j$ du type interne, le point non-supporté P2 est sélectionné dans l'ensemble E0 des points à supporter, si la distance entre le point P2 et un point voisin PV (défini alors comme le point de l'ensemble E0 appartenant à la couche $C_i$ considérée ou à une couche inférieure, $C_j$ avec j< i, le plus proche du point P2 considéré) est supérieure à la distance seuil $\tau$, les distances étant dans cette seconde alternative des distances rectilinéaires.

A l'issue de l'étape 122, l'ensemble E0 des points à supporter est déterminé.

Ainsi, à l'issue de cette première série d'étapes 102, un ensemble de points à supporter est défini qui permet de garantir le maintien du filament au cours de l'impression de l'objet. En variante, d'autres séries d'étapes pourraient être mises en œuvre pour déterminer un tel ensemble de points à supporter garantissant le maintien du filament au cours de l'impression.

Le procédé 100 se poursuit avantageusement par une seconde série d'étapes 104 consistant à compléter un ensemble de points à supporter, avec des points supplémentaires situés sur la surface 4 de l'objet 2, de manière à garantir la stabilité de l'objet 2 à chaque instant de son impression. L'ensemble des points à supporter considéré au début de cette seconde série d'étapes est avantageusement l'ensemble E0 des points à supporter défini lors de la première série d'étapes présentée ci-dessus.

L'impression couche par couche d'un objet 2 monobloc passe souvent par l'impression de sous-objets $2_n$ intermédiaires qui sont indépendants à une certaine hauteur et qui sont soudés ensemble à une hauteur plus élevée. Ceci est illustré sur la figure 5 par un objet 2 en forme de dôme, dont les quatre sous-objets $2_n$ en forme de jambage ne sont reliés les uns aux autres qu'au moment de l'impression de la clé de voute.

Chaque sous-objet $2_n$ peut être instable avant d'être assemblé à un autre sous-objet pour former l'objet 2. Un sous-objet $2_n$ peut donc éventuellement tomber ou basculer, conduisant à une impression défectueuse. Ce problème est un problème générique de la fabrication additive. Il est notamment présent dans les procédés de stéréolithographie.

La mise en œuvre du procédé effectue une analyse permettant d'évaluer, à chaque couche $C_i$ de matière ajoutée par l'imprimante 3D à filament, la stabilité d'au moins un sous-objet $2_n$ imprimé jusque-là.

Il est à souligner que le procédé ne prend pas en compte la possibilité d'utiliser un agent de liaison afin de coller l'objet à imprimer sur le plateau de l'imprimante. Mais l'utilisation d'une telle colle ne peut qu'améliorer la stabilité des éventuels sous-objets de l'objet.

De plus, il est fait l'hypothèse que ledit sous-objet est rigide.

Vérifier qu'un sous-objet $2_n$ posé sur le plan de base XY est en équilibre statique stable, consiste à vérifier si son centre de masse $C_{m,n}$ se projette verticalement en un point $M_n$ situé à l'intérieur d'une surface de base $B_n$ du sous-objet $2_n$.

La surface de base $B_n$ d'un sous-objet $2_n$ est la surface polygonale convexe la plus petite comportant tous les points du sous-objet $2_n$ en contact avec le plan de base XY.

Les étapes suivantes visent à augmenter la surface de base $B_n$ d'un sous-objet $2_n$ instable, par l'ajout d'un pilier vertical 14 entre un nouveau point de contact $P_C$ sur le plan de base XY et un nouveau point à supporter $P_S$ à la surface 4 du sous-objet $2_n$. Le système mécaniquement stable est alors constitué par le sous-objet $2_n$ et le pilier vertical 14 ajouté.

Dans le présent mode de réalisation n'est considérée que la possibilité d'ajouter un pilier vertical 14 entre un point de contact $P_C$ sur le plan de base XY et un point à supporter $P_S$ à la surface du sous-objet. Cependant, lors de la détermination de la structure de support à imprimer, comme cela sera décrit ci-dessous en détail, ce point à supporter $P_S$ sera peut être supporté non pas par un unique pilier vertical 14, mais par un groupe de piliers 14 et de ponts 12. Mais, l'ensemble des points de contact de ce groupe de piliers et de ponts sur le plan de base XY conduit à une augmentation de la surface de base B qui est plus grande et qui inclut l'augmentation de la surface de base B engendrée par l'unique point de contact $P_C$. Ceci découle du fait que la surface de base est par définition convexe et que les ponts sont toujours supportés à chacune de leurs deux extrémités par des piliers, de sorte que si le point à supporter $P_S$ est supporté via un pont, un pilier de support de ce pont sera à l'extérieur de la surface de base déterminée en considérant la seule projection verticale du point à supporter $P_S$. Ainsi, en cours d'impression, la structure de support ne peut qu'améliorer la stabilité du sous-objet par rapport à l'utilisation d'un unique pilier vertical.

A l'étape 124, pour la couche $C_i$ courante, pour le ou chaque sous-objet $2_n$, la projection $M_n$ sur le plan de base XY de son centre de masse $C_{m,n}$ est déterminée. Avantageusement ceci est réalisé en tenant compte des chemins $ch_j$ d'impression et non pas du seul volume délimité par la surface 4 du sous-objet $2_n$. En effet, l'intérieur du sous-objet peut être plein, réalisé en nids d'abeilles, etc., ce qui influence la position du centre de masse $C_{m,n}$ et par conséquent celle du point $M_n$ sur le plan de base XY.

L'équilibre statique d'un sous-objet peut être perturbé par les forces appliquées par la buse lors du dépôt de matière. C'est la raison pour laquelle, est vérifié si un disque $D(M_n)$, centré sur le point $M_n$ et ayant un rayon R prédéfini, se situe intégralement à l'intérieur de la surface de base $B_n$ du sous-objet $2_n$.

Le rayon R du disque est par exemple égal à 3 mm. Dans une variante de réalisation le rayon du disque dépend de la distribution de masse autour du centre de masse et de la hauteur entre le centre de masse et le plateau, de manière à tenir compte d'un effet de bras de levier.

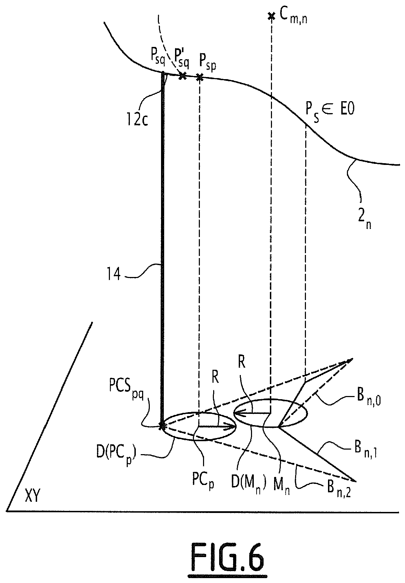

A l'étape 126, pour l'itération sur la couche $C_i$, une surface de base initiale $B_{n,0}$ (figure 6) est agrandie.

Lors de l'analyse de la première couche $C_1$, la surface de base initiale $B_{n,0}$ est initialisée avec le polygone convexe minimal comportant tous les points de contact $P_C$ de la première couche $C_1$ du sous-objet $2_n$ sur le plan de base XY.

A chaque itération, la surface de base initiale $B_{n,0}$ est d'abord agrandie en tenant compte, en tant que point de contact supplémentaire, de la projection sur le plan de base XY de chaque point à supporter $P_S$ de l'ensemble E0 et qui appartient à la couche $C_i$. Une surface de base augmentée $B_{n,1}$ est obtenue.

A l'étape 128 est alors vérifié si le disque $D(M_n)$ est entièrement compris à l'intérieur de la surface de base augmentée $B_{n,0}$.

Dans l'affirmative, le procédé passe à la couche suivante $C_{i+1}$ et reprend à l'étape 114. Pour l'itération suivante, la surface de base initiale $B_{n,0}$ prend la valeur de la surface de base augmentée $B_{n,1}$.

Dans la négative, un point supplémentaire de la surface du sous-objet doit être ajouté à l'ensemble E0 des points à supporter.

Dans un mode de réalisation particulier, un point supplémentaire est choisi de la manière suivante.

A l'étape 130, est déterminée une troisième liste L3 de points de contact candidats $PC_p$. Un point de contact candidat de cette troisième liste est un point du plan de base correspondant à un point $PS_p$ de la surface 4 du sous-objet $2_n$ qui se projette hors de la surface de base augmentée $B_{n,1}$ (ce point n'appartenant pas forcément à la couche $C_i$ courante). Il est à noter que la surface de l'objet est échantillonnée ou pixélisée de sorte que la liste L3 comporte un nombre fini de points.

En construisant un pilier vertical à partir de ce point candidat $PC_p$, pour étayer ce point $PS_p$ de la surface du sous-objet $2_n$ il y a donc a priori possibilité d'augmenter la surface de base $B_n$ du sous-objet étayé par ce pilier et de rendre le système correspondant stable.

Est en fait considéré un cercle $D(PC_p)$ de points candidats secondaires $PCS_{pq}$ autour de chaque point candidat $PC_p$. Ce cercle présente un rayon égal au rayon R du disque $D(M_n)$, de manière à garantir que la surface de base $B_n$ pourra être modifiée de manière à englober l'intégralité du disque $D(M_n)$.

A l'étape 132, pour chaque point candidat secondaire $PCS_{pq}$ du cercle $D(PC_p)$ est déterminé le pourcentage de la surface du disque $D(M_n)$ qui serait englobée par la variation de la surface de base augmentée $B_{n,1}$, si ce point candidat secondaire $PCS_{pq}$ constituait un point de contact du système. Les points $PCS_{pq}$ associés aux différents points candidats $PC_p$ de la liste L3 sont placés dans une quatrième liste L4 par ordre décroissant du pourcentage ainsi calculé. Là encore le périmètre du disque est échantillonné ou pixélisé de sorte que la liste L4 comporte un nombre fini de points.

Puis, à l'étape 134, par itérations successives sur les points $PCS_{pq}$ de la liste L4, la surface de base augmentée $B_{n,1}$ est agrandie pour obtenir une surface de base agrandie $B_{n,2}$.

A chaque intégration d'un nouveau point candidat secondaire $PCS_{pq}$, la surface de base est recalculée et l'on vérifie si la totalité du disque $D(M_n)$ se situe à l'intérieur de la surface de base recalculée.

Ce processus est stoppé lorsque la totalité du disque $D(M_n)$ se situe à l'intérieur de la surface de base recalculée, qui est alors mémorisée en tant que surface de base agrandie $B_{n,2}$. La liste L4 est alors tronquée de manière à ne retenir que les points candidats secondaires utilisés.

A cause de l'ordre de prise en compte des points dans la liste L4, il est possible que des points ajoutés dans les premières itérations ne contribuent finalement pas à la surface de base agrandie $B_{n,2}$, c'est-à-dire ne se situent pas sur le périmètre de cette surface de base modifiée, mais à l'intérieur de celle-ci. Ces points sont, à l'étape 136, retirés des points utilisés pour l'augmentation de la surface de base. Une cinquième liste L5 de points est alors obtenue à partir de la liste L4 tronquée.

La surface de base agrandie $B_{n,2}$ constitue la surface de base initiale $B_{n,0}$ pour l'itération suivante du procédé portant sur la couche suivante $C_{i+1}$.

La liste L5, constituée des points de contact sur le plan de base XY, est utilisée à l'étape 138 pour déterminer les nouveaux points $P_S$ de la surface 4 du sous-objet $2_n$ à supporter pour garantir la stabilité au cours de l'impression.

Pour cela, à l'étape 138, pour chaque point $PCS_{pq}$ de la liste L5, est calculé le point d'intersection entre une verticale issue du point $PCS_{pq}$ considéré et la surface du sous-objet $2_n$ restreinte à la couche courante $C_i$ et aux couches inférieures, $C_j$ avec $j < i$.

Lorsqu'il existe, ce point d'intersection $P_{Sq}$ est ajouté à l'ensemble E0 en tant que nouveau point à supporter.

Si la verticale ne coupe pas la surface du sous-objet $2_n$ restreinte à la couche courante $C_i$, un pont connecteur 12C est ajouté dans un ensemble B0 de ponts connecteur. Ce pont connecteur 12C relie l'extrémité supérieure de la verticale issue du point $PCS_{pq}$ considéré (extrémité se situant au niveau de la couche $C_i$ courante) et un point $P'_{Sq}$ de la surface du sous-objet $2_n$ dont la projection verticale se trouve à l'intérieur du cercle $D(PC_p)$ sur le périmètre duquel se situe le point $PCS_{pq}$ considéré.

Puis le procédé 100 boucle pour analyser la couche suivante $C_{i+1}$ de l'objet.

A l'issue du procédé, est obtenu un ensemble E0 de points à supporter $P_S$ à la surface de l'objet et un ensemble B0 de ponts, comportant des ponts connecteurs 12C.

Procédé de génération d'une structure de support

Le procédé de génération d'une structure de support constituant un second aspect de la présente invention prend en entrée un ensemble de points à supporter. Cet ensemble est avantageusement défini par la mise en œuvre du procédé présenté ci-dessus, mais peut être défini par n'importe lequel des procédés de l'état de la technique.

Le procédé 200 de génération d'une structure de support 10 de l'objet 2 débute ainsi par une étape 210 d'initialisation d'un ensemble E des points à supporter P, qui résulte de la réunion de l'ensemble E0 des points à supporter $P_S$ à la surface 4 de l'objet 2, obtenu en sortie du procédé 100, et des points d'extrémité $P_E$ libres de chaque pont connecteur 12C de l'ensemble B0, obtenu en sortie du procédé 100.

Plus généralement, le point d'extrémité $P_E$ libre d'un pont est un point d'extrémité qui n'est pas encore supporté. Il s'agit donc d'un point constituant un degré de liberté dans la construction de la structure de support : il peut être déplacé en étirant le pont correspondant pour aller chercher un point d'appui situé dans son alignement vertical sur un pont situé plus bas, ou de manière optionnelle sur une partie de la surface de l'objet située dans son alignement vertical.

Le procédé se poursuit par une boucle 212 sur un ensemble de directions de balayage. Une direction de balayage dans le plan XY est perpendiculaire au plan de balayage correspondant qui est par conséquent vertical. De préférence, le procédé prend en compte un nombre d de directions de balayage.

Dans le mode de réalisation décrit ici en détail, ces directions sont séparées angulairement de $\pi/d$. En variante, l'ensemble des directions résulte d'une étape d'analyse géométrique de l'objet 2 pour déterminer s'il présente des directions privilégiées.

Pour des raisons de symétrie, il n'est pas nécessaire de considérer les directions au-delà de $\pi$. La direction d=0 correspond à la direction selon la direction X.

Pour des raisons de clarté, est décrit en détail ci-après le cas de l'itération où la direction de balayage correspond à l'axe X (d=0).

A l'étape 216, le procédé se poursuit par la création de segments à partir de chaque point à supporter P de l'ensemble E et de la direction de balayage courante, en l'occurrence la direction X.

Comme cela est représenté sur la figure 8, un segment d'un premier type Seg1 est généré à partir de chaque point de l'ensemble E qui est du type point à supporter $P_S$ à la surface 4 de l'objet 2. Il s'agit d'un segment de longueur 2 x $l_{max}$, parallèle à la direction de balayage courante et centré sur le point à supporter $P_S$.

Un segment d'un premier type Seg1 est également généré à partir de chaque point de l'ensemble E qui est du type un point d'extrémité $P_E$ libre d'un pont 12, tel que le point $P_{E1}$ du pont $12_1$. Là encore il s'agit d'un segment de longueur 2 x $l_{max}$, parallèle à la direction de balayage courante et centré sur le point d'extrémité $P_E$ libre considéré du pont 12.

Un segment d'un second type Seg2 est généré à partir de chaque point de l'ensemble E qui est un point d'extrémité $P_E$ libre d'un pont 12, tel que le point $P_{E1}$ du pont $12_1$. Il s'agit d'un segment parallèle à la direction du pont $12_1$ et s'étendant à l'écart de celui-ci, au-delà du point d'extrémité libre $P_{E1}$.

Si les deux points d'extrémité du pont 12 sont libres, la longueur d'un segment Seg2 est telle que la somme de la longueur minimale du pont 12 et de la longueur du segment Seg2 est égale à la portée maximale $D_{max}$ de fabrication d'un pont.

Il est à noter que la longueur minimale d'un pont 12 est la distance, évaluée selon la direction du pont, séparant les n points supportés par ce pont.

Si un seul point d'extrémité est libre, la longueur du segment Seg2 est telle que la somme de la longueur du pont 12 et de la longueur du segment Seg2 est égale à la portée maximale $D_{max}$ de fabrication d'un pont.

Les segments construits à cette étape sont mémorisés dans un ensemble S.

A l'étape 218, le procédé se poursuit par la création d'événements e associés aux segments de l'ensemble S. Un évènement est soit un point P de l'ensemble E (point $P_S$ à la surface de l'objet ou point d'extrémité $P_E$ libre d'un pont, éventuellement du type pont connecteur), soit une intersection $P_I$ entre deux segments de l'ensemble S.

La liste des évènements est notée Q. Elle est ordonnée selon la valeur croissante de la coordonnée des évènements e selon la direction de balayage, en l'occurrence selon l'abscisse X des événements.

Puis, le procédé rentre dans une boucle 220 portant sur les évènements e de la liste Q.

A chaque itération de la boucle 220, l'événement courant e est retiré de la liste Q (étape 222), de sorte que le procédé sort de la boucle 220 lorsque la liste Q est vide.

A l'étape 224, le plan de balayage est placé sur l'événement e.

Alors, tous les points P associés à des segments de l'ensemble S qui coupent (en des points d'intersections PI) le plan de balayage sont placés dans une liste PP(e). Il s'agit des segments de la liste S qui, selon la direction de balayage, commencent avant l'événement e et se termine après l'événement e. En particulier, sont retenus les segments issus de l'événement e courant. Une liste PP(e) est obtenue pour chaque évènement e de la liste Q. Chaque liste PP(e) est ordonnée selon la coordonnée Y du plan de balayage.

Puis, à l'étape 226, pour chaque liste PP(e), toutes les sous-listes PPS(e) de points sont considérées. Si la liste PP(e) correspond à l'ensemble (P0,...Pi,... Pn), seront alors considérées toutes les sous-listes (Pj,...,Pk) telles que la distance, selon la direction Y, entre les points Pj et Pk est inférieure à la portée maximale $D_{max}$.

Chaque sous-liste PPS(e) est ensuite évaluée pour déterminer s'il est possible de construire un pont qui permettrait de soutenir tout ou partie des points P de cette sous-liste PPS(e)=(Pj,...,Pk), par autant de piliers 14 et de connecteurs 16, issus de ce pont possible.

A l'étape 228, la hauteur de chaque point de la sous-liste PPS(e)=(Pj,...,Pk) courante est diminuée d'une hauteur minimale $h_{min}$ prédéterminée correspondant à la hauteur minimale d'un connecteur 16. Une liste de hauteurs possibles (hj,...,hk) pour la sous-liste PPS(e)=(Pj,...,Pk) est ainsi obtenue.

Puis, pour chaque hauteur de cette liste de hauteurs, est déterminé un pont possible PPS(e,h) permettant de supporter les points de la liste PPS(e) ; c'est à dire les points dont la hauteur est supérieure à la hauteur courante et qui sont atteignables par un connecteur.

A l'étape 230, il est vérifié qu'un pont possible et les éventuels ponts 14 et connecteurs 16 qu'il est susceptible de porter ne rentrent pas en collision avec l'objet 2 à imprimer.

L'évaluation se poursuit par une étape 232 de calcul d'une fonction de gain G permettant de quantifier l'intérêt de remplacer n piliers verticaux supportant les points de la liste PPS(e,h) et prenant appui sur le plan de base XY, par un pont 14 supportant n piliers verticaux plus courts supportant les points de la liste PPS(e,h), le pont prenant lui-même appui sur le plan de base XY par au moins deux piliers verticaux.

Dans le mode de réalisation actuellement envisagé, et comme cela est représenté sur la figure 9, un pont possible de longueur $\underline{l}$ et de hauteur h, supportant $\underline{n}$ éléments et supporté par deux piliers verticaux présente un gain $G$ de :

$$G = (n{-}2)xh{-}l$$

Avec une telle fonction de gain, seul le cas d'un pont possible supportant plus de deux piliers est favorable.

Dans une variante de réalisation, pour tenir compte du cas où une extrémité d'un pont possible est située au-dessus de l'objet, la longueur exacte du pilier vertical reliant cette extrémité à l'objet est utilisée à la place de la hauteur du pont mesurée par rapport au plan de base. Ainsi, la fonction de gain devient :

$$G = n \times h - h1 - h2 - l$$

où h1 and h2 sont les hauteurs exactes des piliers aux extrémités du pont possible.

Il est à noter que l'abaissement de la hauteur $\underline{h}$ d'un pont possible PPS(e,h) réduit son gain G, de sorte qu'un pont possible possède un gain maximal à la distance $h_{min}$ au-dessous du point le plus bas qu'il supporte.

Ne sont finalement conservés que les ponts possibles PPS(e,h) dont le gain est positif (G>0).

Puis à l'étape 234, une fonction de score F est calculée pour chaque pont possible PPS(e,h) de gain positif.

Dans le mode de réalisation actuellement envisagé, cette fonction de score est définie par :

$$F= G - n \times l_{max}$$

où $l_{max}$ est la plus grande des hauteurs parmi les hauteurs des différents piliers verticaux prenant appui sur le pont possible PPS(e,h) considéré, comme cela est illustré par la figure 9.

Une telle fonction de score F pénalise une distribution inhomogène des hauteurs des éléments verticaux prenant appui sur le pont possible PPS(e,h) considéré.

Une fois que tous les évènements de la liste Q ont été considérés, à l'étape 236, le pont possible PPS(e,h) de gain positif ayant le score F le plus élevé (éventuellement un score négatif) parmi les ponts possibles déterminés lors du balayage selon la direction d courante, est sélectionné en tant que meilleur pont possible BPP pour cette itération du balayage.

A l'étape 238, les points P de la liste PPS(e,h) qui correspondent au meilleur pont possible BPP sont « gelés » et un fichier de description F10 de la structure de support 10 est mis à jour.

Pour un point P de la liste PPS(e,h) correspondant à l'intersection d'un segment du premier type Seg1 avec le plan de balayage, un pilier vertical 14 supplémentaire est ajouté dans le fichier F10.

Ce pilier 14 vertical connecte le point du meilleur pont possible (de hauteur h) correspondant à l'intersection, dans le plan XY, entre le segment Seg1 et le plan de balayage placé en $\underline{e}$.

Ce pilier 14 supporte éventuellement à son extrémité un connecteur 16 incliné pour couvrir la distance entre l'intersection, dans le plan XY, entre le segment Seg1 et le plan de balayage placé en $\underline{e}$ et le point de la liste PPS(e,h) correspondant à ce segment Seg1.

Pour un point P de la liste PPS(e,h) correspondant à un segment du second type Seg2, le pont 12 correspondant à ce segment Seg2 est prolongé jusqu'à la verticale du point d'intersection, dans le plan XY, du segment Seg2 et du plan de balayage placé en e. Un pilier vertical est alors prévu pour connecter le point du meilleur pont possible BPP correspondant à cette intersection et le point d'extrémité du pont 12 déplacé jusqu'à la verticale de ce point d'intersection. Si ce segment Seg2 correspond à un pont 12 dont l'autre extrémité est un point d'extrémité libre, la longueur du segment associé à cette autre extrémité est recalculée pour respecter la contrainte sur la portée maximale $D_{max}$ d'un pont.

Ainsi un connecteur 16 apparaît comme un moyen permettant de relâcher la contrainte sur la distance, évaluée dans le plan XY, entre un point à supporter et un pont permettant de supporter ce point, ce pont appartenant au plan de balayage. En conséquence, il n'est pas nécessaire qu'un point à supporter soit strictement à la verticale d'un pont permettant de le supporter. Il suffit qu'il n'en soit pas trop loin pour qu'un connecteur 16 puisse connecter ce point à un pilier vertical issu de ce pont.

Le fichier F10 de la structure est ainsi mis à jour avec les informations disponibles pour les différents points « gelés ».

A l'étape 240, les différents points P supportés par le meilleur pont BPP= PS(e,h) sont supprimés de l'ensemble E des points à supporter. Sont en revanche ajoutés à l'ensemble E les points d'extrémité du meilleur pont BPP. Ces points d'extrémité libres correspondent à la longueur minimale $l_{min}$ du meilleur pont BPP sélectionné compte tenu des n éléments qu'il supporte.

Le procédé est itéré avec une nouvelle direction de balayage.

Lorsqu'une itération du balayage ne permet pas de déterminer un meilleur pont possible, le procédé 200 passe à l'étape 250. Les points restants de l'ensemble E sont alors supportés par des piliers 14 prolongés jusque sur le plan de base XY, ou, le cas échéant, jusque sur la portion de la surface de l'objet située au-dessous, sur laquelle ils prennent appui. Le fichier F10 de description de la structure est mis à jour.

Eventuellement, peut être implémentée une contrainte sur la hauteur maximum d'un pilier 14. En cas de dépassement de cette hauteur, le pilier est réduit et est supporté par un pont supplémentaire.

Puis, le fichier de description de la structure de support et celui de l'objet sont fusionnés pour permettre la génération d'un fichier de commandes permettant l'impression de l'objet et de la structure de support par une imprimante 3D à filament.

Il est à noter que la fonction de gain peut être modifiée pour décourager la formation de ponts dont les extrémités sont au-dessus de la surface de l'objet à fabriquer. Les fonctions de gain et de score permettent une grande flexibilité et un contrôle de la structure. De plus, des évènements artificiels peuvent être ajoutés à la liste Q pour guider la forme de la structure.

## Revendications

1. Procédé de détermination d'un ensemble de points à supporter pour un objet devant être fabriqué au moyen d'un procédé de fabrication additive, comportant une étape consistant à subdiviser (112) l'objet en couches (Ci) successives, chaque couche correspondant à une épaisseur de matière déposée au cours de la fabrication de l'objet (2) ; et **caractérisé en ce qu'**il comporte pour chaque couche, ajouter à un ensemble (E0) de points à supporter, des points à supporter à la surface de l'objet (2) qui permettent de garantir la stabilité de tous les sous-objet (2n) de l'objet (2), un sous-objet étant défini comme un solide résultant de la fabrication des i premières couches (C,) de l'objet, **en ce qu'**il comporte, pour garantir la stabilité de tout sous-objet (2n), une étape consistant à vérifier que chaque sous-objet posé sur un plan de base horizontal est en équilibre statique stable, étape au cours de laquelle est vérifié si un disque dit de centre de masse (D(Mn)), dont le centre correspond à la projection du centre de masse (Cm,n) dudit sous-objet et ayant un rayon prédéfini (R), se situe entièrement à l'intérieur d'une surface de base (Bn) dudit sous-objet, et **en ce qu'**il comporte, s'il est vérifié que le sous-objet (2n) est instable, une étape consistant à augmenter la surface de base (Bn) dudit sous-objet en prévoyant au moins un élément (14) de support sensiblement vertical entre un point de contact (Pc) du plan de base se situant à l'extérieur de la surface de base et un point à supporter (Ps) à la surface du sous-objet (2n) se projetant verticalement à l'extérieur du plan de base du sous-objet et se situant à une distance dudit point de contact inférieure à une distance correspondant au rayon (R) dudit disque de centre de masse, ledit point à supporter (Ps) à la surface du sous-objet ainsi défini étant ajouté à l'ensemble (E0) des points à supporter ; la surface de base Bn d'un sous-objet 2n étant la surface polygonale convexe la plus petite comportant tous les points du sous-objet 2n en contact avec le plan de base XY.

2. Procédé selon la revendication 1, dans lequel l'élément de support sensiblement vertical prévu est soit un pilier vertical (14) reliant le point de contact et le point à supporter à la surface du sous-objet, soit un pilier vertical (14) et un pont connecteur (12C) horizontal connectant l'extrémité supérieure dudit pilier vertical (14) et ledit point à supporter à la surface du sous-objet.

3. Procédé selon la revendication 1 ou 2, dans lequel, préalablement à l'étape consistant à ajouter à un ensemble (E0) des points à supporter, des points à supporter à la surface de l'objet (2) qui permettent de garantir la stabilité de tous les sous-objet (2n) de l'objet (2), le procédé comporte les étapes consistant à, pour chaque couche :

   - définir (114) au moins un chemin (Chj) de fabrication de la couche courante ; et, pour chaque point d'une pluralité de points le long dudit chemin,
   - tester (120) une condition de support, par la couche précédente, de la matière déposée au point considéré ; et, en cas de non-respect de la condition de support,
   - ajouter le point non-supporté à l'ensemble (E0) des points à supporter.

4. Procédé selon la revendication 3, comportant, en cas de non-respect de la condition de support, une étape (122) supplémentaire de vérification d'un critère de distance, le point non-supporté étant ajouté à l'ensemble des points à supporter si une distance entre le point non-supporté et un point voisin, appartenant à l'ensemble des points à supporter, est supérieure à un distance seuil (τ).

5. Procédé selon la revendication 3 ou la revendication 4, dans lequel, le ou chaque chemin (chj) étant du type chemin de périmètre, lorsqu'il appartient à une portion de périmètre de la couche (Ci) courante, ou du type chemin interne, lorsqu'il appartient à une portion intérieure de la couche (Ci) courante, pour un point non-supporté d'un chemin du type chemin de périmètre, le critère de distance mis en œuvre consiste à évaluer une distance curviligne le long dudit chemin entre le point non-supporté (P2m) et un point voisin (PVm), défini comme le point le plus proche parmi l'ensemble (E0) des points à supporter qui appartiennent à la couche (Ci) courante ; tandis que pour un point non-supporté d'un chemin du type chemin interne, le critère de distance mis en œuvre consiste à évaluer une distance rectiligne entre le point non-supporté (P2m) et un point voisin (PVm), défini alors comme le point le plus proche du point non-supporté (P2m) parmi l'ensemble (E0) des points à supporter qui appartiennent à la couche (Ci) courante et aux couches inférieures à la couche courante.

**6.** Procédé selon l'une quelconque des revendications 3 à 5, comportant une étape (116) supplémentaire de détermination de la pluralité de points à considérer lors de l'étape (120) consistant à tester une condition de support, au cours de laquelle le ou chaque chemin (chj) est décomposé en chemins élémentaires (chejk) s'étendant entre deux points anguleux successifs dudit chemin, et, lorsque la longueur d'un chemin élémentaire est supérieure à une longueur seuil (l0), subdiviser ledit chemin élémentaire en autant de chemins élémentaires, ladite pluralité de points étant constituée par les extrémités de chacun des chemins élémentaires.

**7.** Procédé selon l'une quelconque des revendications 3 à 6, dans lequel la condition de support testée sur un point consiste à calculer la fraction de la surface d'un disque qui couvre la couche précédente (Ci-1), ledit disque étant centré sur le point considéré et possédant un rayon prédéfini, le point considéré étant non-supporté lorsque ladite fraction est inférieure à une fraction seuil, par exemple de 50%.

**8.** Support d'enregistrement d'informations, **caractérisé en ce qu'**il comporte des instructions pour l'exécution d'un procédé conforme à l'une quelconque des revendications 1 à 7, lorsque les instructions sont exécutées par un calculateur électronique.

**Patentansprüche**

**1.** Verfahren zur Bestimmung einer Reihe von zu unterstützenden Punkten für ein Objekt, welches anhand eines additiven Herstellungsverfahrens herzustellen ist, welches einen Schritt beinhaltet, der darin besteht, das Objekt in aufeinanderfolgende Schichten (Ci) zu unterteilen (112) wobei jede Schicht einer Materialstärke entspricht, die im Laufe der Herstellung des Objekts (2) abgeschieden wird; und **dadurch gekennzeichnet, dass** es für jede Schicht das Hinzufügen einer Reihe (E0) von zu unterstützenden Punkten beinhaltet, zu unterstützende Punkte an der Oberfläche des Objekts (2), die es ermöglichen, die Stabilität aller Teilobjekte (2n) des Objekts (2) zu gewährleisten, wobei ein Teilobjekt als Festkörper definiert wird, der sich aus der Herstellung der ersten i Schichten (C,) des Objekts ergibt, dadurch, dass es zur Gewährleistung der Stabilität aller Teilobjekte (2n) einen Schritt beinhaltet, der darin besteht, zu überprüfen, dass jedes auf eine horizontale Grundebene gestellte Teilobjekt in stabilem statischem Gleichgewicht ist, Schritt, im Laufe dessen überprüft wird, ob sich eine sogenannte Massenmittelpunktscheibe (D(Mn)), deren Mittelpunkt der Projektion des Massenmitelpunkts (Cm,n) des Teilobjekts entspricht, und die einen vordefinierten Radius (R) aufweist, vollständig im Inneren einer Grundfläche (Bn) des Teilobjekts befindet, und dadurch, dass es, wenn überprüft ist, dass das Teilobjekt (2n) instabil ist, einen Schritt beinhaltet, der darin besteht, die Grundfläche (Bn) des Teilobjekts zu vergößern, indem mindestens ein im Wesentlichen vertikales Stützelement (14) zwischen dem Kontaktpunkt (Pc) der Grundebene, der sich außerhalb der Grundfläche befindet, und einem zu unterstützenden Punkt (Ps) an der Oberfläche des Teilobjekts (2n), der sich vertikal nach außerhalb der Grundfläche des Teilobjekts projiziert, und sich in einem Abstand zum unteren Kontaktpunkt in einem dem Radius (R) entsprechenden Abstand von der Massenmittelpunktscheibe befindet, vorgesehen wird, wobei der so defnierte zu unterstützende Punkt (Ps) an der Oberfläche des Teilobjekts zur Reihe (E0) der zu unterstützenden Punkte hinzugefügt wird; wobei die Grundfläche Bn eines Teilobjekts 2n die kleinste konvexe polygonale Fläche ist, welche alle Punkte des Teilobjekts 2n in Kontakt mit der Grundebene XY beinhaltet.

**2.** Verfahren nach Anspruch 1, wobei das vorgesehene, im Wesentlichen vertikale Stützelement entweder eine vertikale Säule (14) ist, die den Kontaktpunkt und den zu unterstützenden Punkt mit der Oberfläche des Teilobjekts verbindet, oder eine vertikale Säule (14) und eine horizontale Verbindungsbrücke (12C) ist, die das obere Ende der vertikalen Säule (14) und den zu unterstützenden Punkt an die Oberfläche des Teilobjekts verbindet.

**3.** Verfahren nach Anspruch 1 oder 2, wobei das Verfahren vor dem Schritt, der darin besteht, zu einer Reihe (E0) der zu unterstützenden Punkte zu unterstützende Punkte an der Oberfläche des Objekts (2) hinzuzufügen, die es ermöglichen, die Stabilität aller Teilobjekte (2n) des Objekts (2) zu gewährleisten, die Schritte beinhaltet, die darin bestehen, für jede Schicht:

  - mindestens einen Herstellungspfad (Chj) der laufenden Schicht zu definieren (114); und, für jeden Punkt einer Vielzahl von Punkten entlang des Pfades,

- eine Untertützungsbedingung, durch die vorherige Schicht, des am betrachteten Punkt abgeschiedenen Materials zu testen (120); und, im Falle der Nicht-Einhaltung der Untertützungsbedingung,

- den nicht unterstützten Punkt zur Reihe (E0) der zu unterstützenden Punkte hinzuzufügen.

4. Verfahren nach Anspruch 3, im Falle der Nicht-Einhaltung der Untertützungsbedingung, einen zusätzlichen Überprüfungsschritt (122) eines Abstandskriteriums beinhaltend, wobei der nicht unterstützte Punkt zur Reihe von zu unterstützenden Punkten hinzugefügt wird, wenn ein Abstand zwischen dem nicht unterstützten Punkt und einem benachbarten Punkt, der der Reihe der zu unterstützenden Punkte angehört, größer als ein Schwellenabstand ($\tau$) ist.

5. Verfahren nach Anspruch 3 oder Anspruch 4, wobei, da der oder jeder Pfad (chj) in der Art eines Umfangspfades ist, wenn er einem Umfangsabschnitt der laufenden Schicht (Ci) angehört, oder in der Art eines inneren Pfades, wenn er einem inneren Abschnitt der laufenden Schicht (Ci) angehört, für einen nicht unterstützten Punkt eines Pfades in der Art eines Umfangspfades das umgesetzte Abstandskriterium darin besteht, einen krummlinigen Abstand entlang des Pfades zwischen dem nicht unterstützten Punkt (P2m) und einem benachbarten Punkt (PVm), der als der nächstgelegene Punkt aus der Reihe (E0) der zu unterstützenden Punkte, die der laufenden Schicht (Ci) angehören, zu bewerten; während für einen nicht unterstützten Punkt eines Pfades in der Art eines inneren Pfades das umgesetzte Abstandskriterium darin besteht, einen geradlinigen Abstand zwischen dem nicht unterstützten Punkt (P2m) und einem benachbarten Punkt (PVm), der somit als der nächstgelegene Punkt des nicht unterstützten Punktes (P2m) aus der Reihe (E0) der zu unterstützenden Punkte, die der laufenden Schicht (Ci) und den Schichten unterhalb der laufenden Schicht angehören, zu bewerten.

6. Verfahren nach einem der Ansprüche 3 bis 5, einen zusätzlichen Schritt (116) des Bestimmens der Vielzahl von in dem Schritt (120) zu betrachtenden Punkten beinhaltend, der darin besteht, eine Unterstützungsbedingung zu testen, im Laufe dessen der oder jeder Pfad (chj) in elemetare Pfade (chejk) aufgeteilt werden, die sich zwischen zwei aufeinanderfolgenden Knickpunkten des Pfades erstrecken, und wenn die Länge eines elementaren Pfades größer als eine Schwellenlänge (l0) ist, Unterteilen des elementaren Pfades in ebensoviele elementare Pfade, wobei die Vielzahl von Punkten aus den Enden jedes der elementaren Pfade gebildet wird.

7. Verfahren nach einem der Ansprüche 3 bis 6, wobei die an einem Punkt getestete Unterstützungsbedingung darin besteht, die Fraktion der Oberfläche einer Scheibe zu berechnen, die die vorherige Schicht (Ci-1) abdeckt, wobei die Scheibe auf dem betrachteten Punkt zentriert ist, und einen vordefinierten Radius besitzt, wobei der betrachtete Punkt nicht unterstützt ist, wenn die Fraktion kleiner als eine Schwellenfraktion, beispielsweise 50%, ist.

8. Informationsaufzeichnungsmedium, **dadurch gekennzeichnet, dass** es Anweisungen zur Ausführung eines Verfahrens nach einem der Ansprüche 1 bis 7 beinhaltet, wenn die Anweisungen durch einen elektronischen Rechner ausgeführt werden.

## Claims

1. A method for determining a set of points to be supported for an object having to be fabricated by means of an additive fabrication method, comprising a step consisting in subdividing (112) the object into successive layers ($C_i$), each layer corresponding to a thickness of material deposited during the fabrication of the object (2); and **characterized in that** it comprises, for each layer, adding, to a set (E0) of points to be supported, points to be supported on the surface of the object (2) which make it possible to guarantee the stability of all the sub-objects ($2_n$) of the object (2), a sub-object being defined as a solid resulting from the fabrication of the i first layers ($C_i$) of the object, **in that** it comprises, to guarantee the stability of any sub-object ($2_n$), a step consisting in checking that each sub-object placed on a horizontal base plane is in stable static equilibrium, a step during which it is checked whether a so-called center-of-mass disk ($D(M_n)$), the center of which corresponds to the projection of the center of mass ($C_{m,n}$) of said sub-object and having a predefined radius (R), is entirely situated within a base surface ($B_n$) of said sub-object, and **in that** it comprises, if it is confirmed that the sub-object ($2_n$) is unstable, a step consisting in increasing the base surface ($B_n$) of said sub-object by providing at least one substantially vertical support element (14) between a point of contact (Pc) of the base plane located outside the base surface and a point to be supported ($P_S$) on the surface of the sub-object ($2_n$) projected vertically outside of the base plane of the sub-object and located at a distance from said point of contact less than a distance corresponding to the radius (R) of said center-of-mass disk, said point to be supported ($P_S$) on the surface of the sub-object thus defined being added to the set (E0) of the points to be supported, the base surface Bn of a sub-object 2n being the smallest convex polygonal surface comprising all the points of the sub-object 2n in contact with the base plane XY.

2. The method as claimed in claim 1, wherein the substantially vertical support element provided is either a vertical pillar (14) linking the point of contact and the point to be supported on the surface of the sub-object, or a vertical pillar (14) and a horizontal connecting bridge (12C) connecting the top end of said vertical pillar (14) and said point to be supported on the surface of the sub-object.

3. The method as claimed in any one of claims 1 or 2, wherein, prior to the step consisting in adding, to a set (E0) of the points to be supported, points to be supported on the surface of the object (2) which make it possible to guarantee the stability of all the sub-objects ($2_n$) of the object (2), the method comprises the steps consisting in, for each layer:

   - defining (114) at least one path ($Ch_j$) for fabrication of the current layer; and, for each point of a plurality of points along said path,
   - testing (120) a condition of support, by the preceding layer, of the material deposited at the point considered; and, in case of noncompliance with the support condition,
   - adding the unsupported point to the set (E0) of the points to be supported.

4. The method as claimed in claim 3, comprising, in case of noncompliance with the support condition, an additional step (122) of verification of a distance criterion, the unsupported point being added to the set of the points to be supported if a distance between the unsupported point and a neighboring point, belonging to the set of the points to be supported, is greater than a threshold distance ($\tau$).

5. The method as claimed in claim 3 or claim 4, wherein, the or each path ($ch_j$) being of the perimeter path type, when it belongs to a portion of the perimeter of the current layer ($C_i$), or of the internal path type, when it belongs to an internal portion of the current layer ($C_i$), for an unsupported point of a path of the perimeter path type, the distance criterion implemented consists in evaluating a curvilinear distance along said path between the unsupported point ($P2_m$) and a neighboring point ($PV_m$), defined as the closest point out of the set (E0) of the points to be supported which belong to the current layer ($C_i$); whereas, for an unsupported point of a path of the internal path type, the distance criterion implemented consists in evaluating a rectilinear distance between the unsupported point ($P2_m$) and a neighboring point ($PV_m$), then defined as the point closest to the unsupported point ($P2_m$) out of the set (E0) of the points to be supported which belong to the current layer ($C_i$) and to the layers below the current layer.

6. The method as claimed in any one of claims 3 to 5, comprising an additional step (116) of determination of the plurality of points to be considered in the step (120) consisting in testing a support condition, during which the or each path ($ch_j$) is broken down into elementary paths ($che_{jk}$) extending between two successive angular points of said path, and, when the length of an elementary path is greater than a threshold length ($l_0$), subdividing said elementary path into as many elementary paths, said plurality of points consisting of the ends of each of the elementary paths.

7. The method as claimed in any one of claims 3 to 6, wherein the support condition tested on a point consists in calculating the fraction of the surface of a disk which covers the preceding layer ($C_{i-1}$), said disk being centered on the point considered and having a predefined radius, the point considered being unsupported when said fraction is less than a threshold fraction, for example 50%.

8. An information storage medium, **characterized in that** it comprises instructions for the execution of a method according to any one of claims 1 to 7, when the instructions are executed by an electronic computer.

## FIG.1
### ART ANTERIEUR

## FIG.2
### ART ANTERIEUR

## FIG.3

FIG.4

FIG.5a

$C_m$

$M$

2

Z

Y

X

FIG.5b

$2_n$

$C_{m,n}$

$B_{n,0}$

$M_n$

Z

Y

X

FIG.5c

$C_{m,n}$

$P_s$

14

$M_n$

$B_{n,2}$

Z

Y

X

## FIG.6

FIG.7

## FIG.8

## FIG.9

## FIG.10

FIG.11

**EP 3 152 037 B1**

## RÉFÉRENCES CITÉES DANS LA DESCRIPTION

### Documents brevets cités dans la description

- WO 0220251 A2